# EUROPÄISCHE PATENTSCHRIFT

(11) **EP 0 852 632 B1**
(45) Veröffentlichungstag und Bekanntmachung des Hinweises auf die Patenterteilung: **08.12.1999**
(21) Anmeldenummer: 96932579.4
(22) Anmeldetag: 20.09.1996
(51) Int. Cl.: D06F 39/02, B65D 41/26

(54) **DOSIERSPEICHER ZUR AUFNAHME UND ABGABE VON WASCHMITTELN UND DIESEN ENTHALTENDE VERPACKUNGSEINHEIT**
METERING RESERVOIR FOR RECEIVING AND DISPENSING WASHING AGENTS AND A PACKAGING UNIT CONTAINING SAID RESERVOIR
RESERVOIR DOSEUR POUR RECEVOIR ET DISTRIBUER DES DETERGENTS ET UNITE D'EMBALLAGE CONTENANT LEDIT RESERVOIR

(30) Priorität: 28.09.1995 DE 19536086
(43) Veröffentlichungstag der Anmeldung: 15.07.1998
(73) Patentinhaber: Henkel Kommanditgesellschaft auf Aktien, 40589 Düsseldorf-Holthausen (DE)
(72) Erfinder: KITTSCHER, Peter, D-41564 Kaarst (DE); MÜHLHAUSEN, Georg, D-40597 Düsseldorf (DE)
(86) Internationale Anmeldenummer: EP9604119
(87) Internationale Veröffentlichungsnummer: WO9712087

(56) Entgegenhaltungen:
- EP-A- 0 248 341
- EP-A- 0 649 934

## Beschreibung

Die Erfindung betrifft einen Dosierspeicher mit mindestens einer Öffnung zur Aufnahme und Abgabe von Waschmitteln in vorzugsweise flüssiger Form, mit einer bei nach oben weisender Öffnung, die etwa in dieser Lage im zentralen Bereich des oberen Teils des Dosierspeichers angeordnet ist, größeren Länge als Höhe, und mit Befestigungsmitteln zum lösbaren Anbringen des Dosierspeichers an einer Flasche.

Dosierspeicher zur Aufnahme von flüssigen Waschmitteln und zur Abgabe der Waschmittel unmittelbar innerhalb der Trommel einer Textilwaschmaschine sind in einer Vielzahl von Variationen bekannt. Sie wurden entwickelt, da viele der üblichen Waschmaschinen nur für die Verwendung von pulverförmigen, nicht aber von flüssigen Waschmitteln ausgelegt sind. Daher werden die in der Regel aus einem Kunststoffhohlkörper mit einer Öffnung bestehenden Dosierer mit der vorgesehenen Menge an flüssigem Waschmittel gefüllt und in aufrechter Lage auf die zu waschenden Textilien in die Waschmaschinentrommel gestellt. Die in der Waschmaschinentrommel eingelegten Wäschestücke haben jedoch eine unregelmäßige und außerdem nachgiebige Oberfläche, so daß der mit Waschmittel gefüllte Dosierspeicher oft in eine Schräglage gelangt oder gar umkippt, so daß das flüssige Waschmittel aus dem Dosierspeicher bereits vor dem Zulaufen von Wasser und nicht erst bei der kurz darauf einsetzenden Trommelbewegung ausläuft. Das vorzeitige, konzentrierte Aufbringen des flüssigen Waschmittels auf Teile der Textilien kann zum sogenannten "Spotting", nämlich zu Flecken auf den gewaschenen Textilien führen.

Wünschenswert wäre daher ein Dosierspeicher mit einer größeren Sicherheit gegen ein vorzeitiges Entleeren. Diese Forderung ist jedoch nicht ohne weiteres zu erfüllen, wenn man nicht andere Nachteile in Kauf nehmen will. So bedingt eine größere Standsicherheit einen möglichst flachen Dosierspeicher mit obenliegender Einfüll- und Abgabeöffnung. Bei gegebenem Mindestvolumen erhält man damit eine relativ große Länge und Breite bei kleiner Höhe.

Eine solche Form führt jedoch zu folgendem Nachteil. Bekannt ist das Problem, die Dosierspeicher einerseits an der Waschmittelflasche derart zu befestigen, so daß sie ein möglichst kleines Volumen beanspruchen. Andererseits soll dem Verbraucher eine sinnvolle Aufbewahrungsmöglichkeit für den Dosierspeicher gegeben werden, wenn dieser nicht in Gebrauch ist. Dazu ist es, zum Beispiel aus der EP 0 649 934 Al, bekannt, den Dosierspeicher mit seiner Aufnahme- und Abgabeöffnung auf den Verschluß der Waschmittelflasche aufzustecken. Die Dosierspeicher üblicher Form und Größe beanspruchen auf diese Weise in horizontaler Richtung keinen zusätzlichen Platz, da sie die Grundmaße der Flasche nicht überschreiten. Beim Transport und im Ladenregal wird daher kein zusätzlicher Platz für den Dosierspeicher benötigt.

Wird nun ein Dosierspeicher mit einer erheblich höheren Standsicherheit, also mit einer erheblich größeren Erstreckung in Länge und Breite, auf den Verschluß der Waschmittel flasche aufgesetzt, so werden die Grundmaße der Flasche wesentlich überschritten, so daß der Dosierspeicher zu einem zusätzlichen Platzbedarf führt. Dies gilt insbesondere für Verpackungseinheiten mit relativ kleinformatigen Waschmittelflaschen und entsprechend kleinen Grundmaßen.

Der Erfindung liegt daher die Aufgabe zugrunde, einen kippsicheren Dosierer zu entwickeln, der das Waschmittel in der Maschine erst dann abgibt, wenn sich die Waschmitteltrommel dreht, und der gleichzeitig mit einfachen Mitteln an der Waschmittelflasche befestigt werden kann, ohne daß auch bei kleinen Waschmittelflaschen die Grundmaße überschritten werden.

Diese Aufgabe wird beim eingangs genannten Dosierspeicher erfindungsgemäß dadurch gelöst, daß bei nach oben weisender Öffnung sowohl die Breite als auch die Länge des Dosierspeichers größer als seine Höhe sind und vorzugsweise mindestens 150 % der Höhe betragen, daß die Ränder der Öffnung so weit von den äußeren Seiten des Dosierspeichers entfernt sind, so daß der mit Flüssigkeit halb gefüllte Dosierspeicher erst bei einer Neigung von mehr als 60° gegenüber seiner Lage mit nach oben weisender Öffnung ausläuft, und daß die Mittellinien des Befestigungsmittels und der Öffnung in einer Ebene und senkrecht zueinander verlaufen.

Das genannte Verhältnis von Breite und Länge zur Höhe des Dosierspeichers ermöglicht eine erheblich verbesserte Standsicherheit auch bei unregelmäßig in der Waschmitteltrommel angeordneten Wäschestücken und selbst bei einer schrägen Oberfläche dieser Textilien. Zur Beurteilung der Kippsicherheit spielt weniger die Standfläche des Dosierspeichers eine Rolle als die gesamte Erstreckung in der waagerechten Ebene, da der Dosierer auf einer unregelmäßigen und nachgiebigen Oberfläche, nämlich den Wäschestücken steht. Mit der genannten Lage der Öffnung des Dosierspeichers ist die Auslaufsicherheit gewährleistet, so daß der Dosierspeicher das Waschmittel erst beim Drehen der Trommel abgibt. Die Lage der Befestigungsmittel ermöglicht ein Anbringen des Dosierspeichers an einer üblichen flachen Waschmittelflasche mit zur Seite hin zeigender Öffnung, so daß die in Gebrauchslage sehr große Erstreckung des Dosierspeichers in der waagerechten Ebene nicht zu einem Überschreiten der Grundmaße der Flasche und damit nicht zu einem zusätzlichen Volumenbedarf beim Transport und bei der Aufstellung im Ladenregal oder beim Verbraucher führt.

Als Befestigungsmittel für den Dosierspeicher ist im Gegensatz zum Stand der Technik nicht die Einlaß- und Abgabeöffnung, sondern ein davon getrenntes Befestigungsmittel vorgesehen. In einer vorteilhaften Ausgestaltung der Erfindung sind die Befestigungsmittel zum Anbringen des Dosierspeichers als ein an den Flaschenverschluß angepaßtes Sackloch in einer Seite des Dosierspeichers ausgebildet. Erfindungsgemäß wird der Dosierspeicher also nicht mit seiner Abgabeöffnung, sondern mit einem separaten Sackloch auf den Verschluß der Waschmittelflasche aufgesetzt, so daß die Aufnahme- und Abgabeöffnung in eine etwa waagerechte Richtung weist.

Zum exakten Einhalten der Dosierungsvorschrift für das flüssige Waschmittel werden in einer vorteilhaften Ausgestaltung des erfindungsgemäßen Dosierspeichers eingeformte, parallel und in der Befüllungslage horizontal verlaufende Vor- und/oder Rücksprünge der Seitenwand/Seitenwände, insbesondere in Form von Stufen vorgeschlagen. Die Vor- bzw. Rücksprünge bzw. Stufen entsprechen den vom Waschmittelhersteller empfohlenen Dosiermengen.

Ein weiterer Vorteil wird erreicht, wenn bei einer aus einer Flasche und dem erfindungsgemäßen Dosierspeicher bestehenden Verpackungseinheit der Innendurchmesser der Aufnahmeöffnung des Dosierspeichers etwa so groß wie der Außendurchmesser der Ausgießmündung der Flasche ist. In diesem Fall kann für eine restlose Entleerung die Flasche über Kopf in den Dosierspeicher gestellt werden. Vorzugsweise ist der Innendurchmesser der Aufnahmeöffnung des aus elastischem Kunststoff bestehenden Dosierspeichers geringfügig kleiner als der Außendurchmesser der Ausgießmündung der Flasche. Damit kann die geöffnete Flaschenmündung, die in speziellen Fällen auch ein Flaschenverschluß im geöffneten Zustand sein kann, in die Öffnung des Dosierspeichers eingeklemmt werden, so daß ein Preßsitz erreicht wird. In dieser Anordnung kann die Verpackungseinheit für einen längeren Zeitraum stehen bleiben, um auf bequeme Weise selbst bei dickflüssigen Produkten eine praktisch restlose Entleerung der Flasche zu erzielen, ohne daß die Flasche manuell in der auf dem Kopf stehenden Lage festgehalten werden muß.

Eine Unterstützung dieser Anordnung durch eine senkrechte Fläche, zum Beispiel eine Wand, ist nicht erforderlich, wenn in weiteren vorteilhaften Ausgestaltungen des Dosierspeichers dieser einen der Aufnahmeöffnung gegenüberliegenden Standboden hat, dessen Flächeninhalt mindestens so groß wie die Querschnittsfläche der Aufnahmeöffnung des Dosierspeichers und vorzugsweise 2,5 mal so groß ist.

Im folgenden wird ein Ausführungsbeispiel der Erfindung anhand von Zeichnungen näher beschrieben. Es zeigen
- Figur 1: einen vertikalen Schnitt durch einen erfindungsgemäßen Dosierspeicher in schematischer Darstellung,
- Figur 2: eine Seitenansicht des Dosierspeichers nach Figur 1 in Richtung des Pfeils 6 und
- Figur 3: eine Draufsicht auf den Dosierspeicher nach den Figuren 1 und 2.

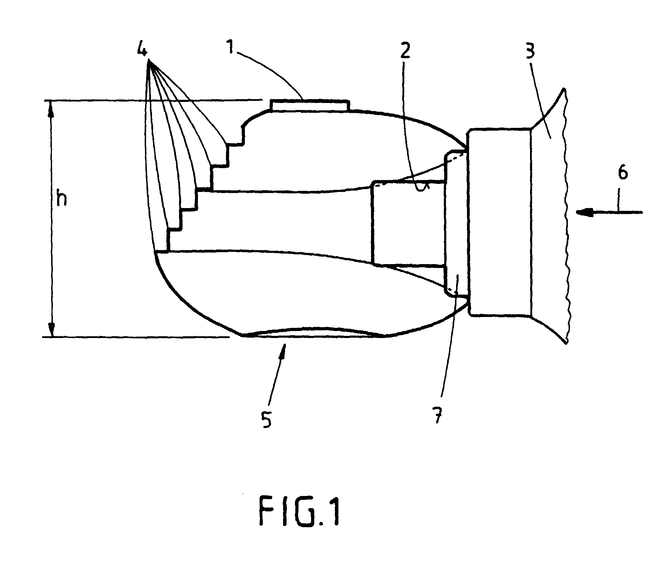

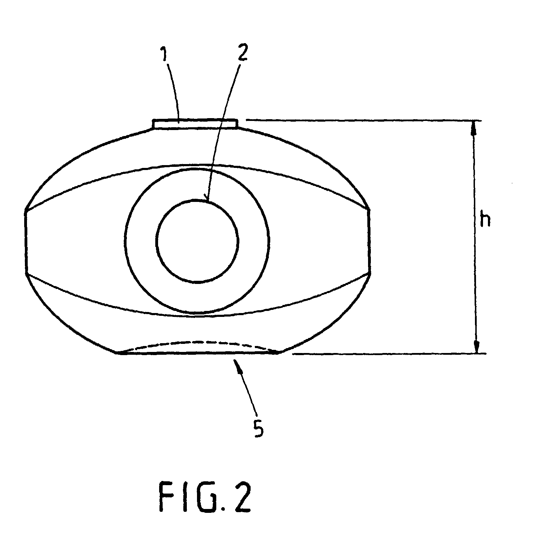

Die Figuren 1 bis 3 sind maßstäblich ausgeführt, um die Größenverhältnisse besonders deutlich herauszustellen. In allen Zeichnungen haben gleiche Bezugszeichen die gleiche Bedeutung und werden daher gegebenenfalls nur einmal erläutert.

Der Dosierspeicher hat eine diskusförmige Grundform mit einer relativ kleinen zentralen Öffnung 1, deren Durchmesser etwa 20 mm in diesem speziellen Ausführungsbeispiel beträgt. Die relativ große Erstreckung des Dosierspeichers in der horizontalen Ebene im Vergleich zu seiner Höhe h führt zusammen mit der relativ kleinen zentralen Öffnung zu einer stabilen Lage auf den Wäschestücken, so daß der flüssige Inhalt erst bei einer relativ großen Kippneigung ausfließt. Damit ist gewährleistet, daß das flüssige Waschmittel erst dann abgegeben wird, wenn sich die Waschmitteltrommel nach dem Wassereinlauf dreht und damit der Dosierspeicher in eine Kippstellung gebracht wird. Ein Spotting, das heißt ein vorzeitiges konzentriertes punktuelles Aufbringen von Waschmittel auf Textilien wird vermieden.

Zum Anbringen des Dosierspeichers an der Waschmittelflasche ist ein Sackloch 2 vorgesehen, das mit seinen Konturen dem Verschluß einer Waschmittelflasche 3 angepaßt ist. Entsprechend einer Schulter 7 des Flaschenverschlusses ist das Sackloch 2 abgestuft ausgeführt. Die Waschmittelflasche 3 ist in Figur 1 der Deutlichkeit halber ebenfalls dargestellt, allerdings nur mit ihrem oberen Teil einschließlich des Verschlusses.

Das Sackloch 2 ist an der Seite des Dosierspeichers eingeformt, damit der Dosierspeicher nach dem Aufstecken auf den Flaschenverschluß die Grundmaße der Flasche nicht überschreitet. Nach dem Aufstecken hat der Dosierspeicher das Aussehen einer auf der Flasche stehenden vertikalen Scheibe, so daß zusätzlich zum Gebrauchswert auch der ästhetische Eindruck der aus Flasche und Dosierspeicher zusammengesetzten Verpackungseinheit verbessert wird.

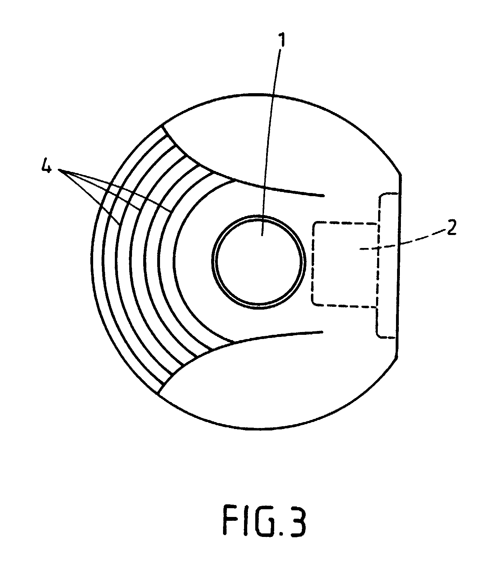

Die Dosierung des flüssigen Waschmittelproduktes wird durch stufenförmige Kanten 4 erleichtert, die den Dosierskalen entsprechen und auf der Oberseite des diskusförmigen Dosierspeichers in Teilkreisen umlaufen (Figur 3).

Der Innendurchmesser der Öffnung 1 ist derart an den Außendurchmesser der Waschmittelflaschenmündung angepaßt, daß die Waschmittelflasche mit ihrer Öffnung in die Öffnung 1 des Dosierers eingeführt und dort klemmend gehalten werden kann, um eine gute Restentleerung auch bei dickflüssigen Produkten auf eine einfache, problemlose Weise zu erreichen. Ein für eine ebene Standfläche ausgelegter Boden 5 des Dosierspeichers ermöglicht ein Stehenlassen des Dosierspeichers mit in der Öffnung 1 eingesetzter Flasche, ohne daß eine manuelle oder sonstige Unterstützung notwendig ist. Auf diese Weise kann der auf dem Kopf stehenden Flasche genügend Zeit gegeben werden, auch ein dickflüssiges Produkt in den Dosierspeicher abzugeben. Im Ausführungsbeispiel ist der Innendurchmesser der Öffnung 1 geringfügig kleiner als der Außendurchmesser der Waschmittelflaschenmündung bemessen.

### Bezugszeichenliste

- 1: Öffnung
- 2: Sackloch
- 3: Waschmittel flasche
- 4: Kanten, Stufen
- 5: Standboden
- 6: Pfeil
- 7: Schulter

## Patentansprüche

1. Dosierspeicher mit mindestens einer Öffnung (1) zur Aufnahme und Abgabe von Waschmitteln in vorzugsweise flüssiger Form, mit einer bei nach oben weisender Öffnung (1), die etwa in dieser Lage im zentralen Bereich des oberen Teils des Dosierspeichers angeordnet ist, größeren Länge als Höhe, und mit Befestigungsmitteln (2) zum lösbaren Anbringen des Dosierspeichers an einer Flasche (3),
**dadurch gekennzeichnet,**
daß bei nach oben weisender Öffnung (1) sowohl die Breite als auch die Länge des Dosierspeichers größer als seine Höhe (h) sind und vorzugsweise mindestens 150 % der Höhe (h) betragen, daß die Ränder der Öffnung (1) so weit von den äußeren Seiten des Dosierspeichers entfernt sind, so daß der mit Flüssigkeit halb gefüllte Dosierspeicher erst bei einer Neigung von mehr als 60° gegenüber seiner Lage mit nach oben weisender Öffnung ausläuft, und daß die Mittellinien des Befestigungsmittels (2) und der Öffnung (1) in einer Ebene und senkrecht zueinander verlaufen.

2. Dosierspeicher nach Anspruch 1,
**dadurch gekennzeichnet,**
daß die Befestigungsmittel zum Anbringen des Dosierspeichers als ein an den Flaschenverschluß angepaßtes Sackloch (2) in einer Seite des Dosierspeichers ausgebildet sind.

3. Dosierspeicher nach Anspruch 1 oder 2,
**gekennzeichnet durch**
eingeformte, parallel und in der Befüllungslage horizontal verlaufende Vor- und/oder Rücksprünge der Seitenwand/Seitenwände, insbesondere in Form von Stufen (4).

4. Dosierspeicher nach einem der vorangehenden Ansprüche,
**dadurch gekennzeichnet,**
daß der Dosierspeicher einen der Aufnahmeöffnung (1) gegenüberliegenden Standboden (5) hat, dessen Flächeninhalt mindestens so groß wie die Querschnittsfläche der Aufnahmeöffnung (1) des Dosierspeichers ist.

5. Dosierspeicher nach Anspruch 4,
**dadurch gekennzeichnet,**
daß der Standboden (5) einen Flächeninhalt aufweist, der mindestens 2,5 mal so groß wie die Querschnittsfläche der Aufnahmeöffnung (1) ist.

6. Verpackungseinheit für flüssige Waschmittel, bestehend aus einer Flasche und einem Dosierspeicher nach einem der vorhergehenden Ansprüche,
**dadurch gekennzeichnet,**
daß der Innendurchmesser der Aufnahmeöffnung (1) des Dosierspeichers etwa so groß wie der Außendurchmesser der Ausgießmündung der Flasche ist.

7. Verpackungseinheit nach Anspruch 6,
**dadurch gekennzeichnet,**
daß der Innendurchmesser der Aufnahmeöffnung (1) des aus elastischem Kunststoff bestehenden Dosierspeichers geringfügig kleiner als der Außendurchmesser der Ausgießmündung der Flasche ist.

## Claims

1. A dispenser which comprises at least one opening (1) for receiving and dispensing detergents in preferably liquid form; which has a greater length than height when the opening (1) faces upwards, the opening being centrally positioned in the upper part of the dispenser in that position; and which has fixing means for detachably mounting the dispenser on a bottle (3), characterized in that, when the opening (1) faces upwards, both the width and the length of the dispenser are greater than its height (h) and are preferably at least 150% of its height (h), in that the edges of the opening (1) are so far removed from the outer sides of the dispenser that the dispenser half-filled with liquid only runs out when it is inclined at an angle of more than 60° relative to the position where the opening faces upwards and in that the centre lines of the fixing means (2) and the opening (1) extend in one plane and perpendicularly of one another.

2. A dispenser as claimed in claim 1, characterized in that the fixing means for mounting the dispenser is in the form of a blind hole (2) adapted to the bottle closure in one side of the dispenser.

3. A dispenser as claimed in claim 1 or 2, characterized by moulded projections and/or recesses extending parallel to one another and - in the filling position - horizontally in the side wall/side walls, more particularly in the form of steps.

4. A dispenser as claimed in any of the preceding claims, characterized in that it has a base (5) opposite the opening (1) on which it stands and of which the surface area is at least as large as the cross-sectional area of the opening (1) of the dispenser.

5. A dispenser as claimed in claim 4, characterized in that the base (5) has a surface area which is at least 2.5 times larger than the cross-sectional area of the opening (1).

6. A pack for liquid detergents consisting of a bottle and a dispenser as claimed in any of the preceding claims, characterized in that the internal diameter of the opening (1) of the dispenser is approximately equal to the external diameter of the pouring opening of the bottle.

7. A pack as claimed in claim 6, characterized in that the internal diameter of the opening (1) of the dispenser consisting of an elastic plastics material is slightly smaller than the external diameter of the pouring opening of the bottle.

## Revendications

1. Réservoir doseur comprenant au moins un orifice (1) qui sert à recevoir et à délivrer des détergents de préférence sous forme liquide, avec, dans le cas d'un orifice (1) tourné vers le haut qui est disposé à peu près dans cette position dans la zone centrale de la partie supérieure du réservoir doseur, une longueur plus grande que sa hauteur, et avec des moyens de fixation (2) qui servent à mettre de façon amovible le réservoir doseur sur un flacon (3),
caractérisé en ce que
• dans le cas d'un orifice (1) tourné vers le haut la largeur comme aussi la longueur du réservoir doseur sont plus grandes que sa hauteur (h) et atteignent de préférence au moins 150 % de la hauteur ,
• les bords de l'orifice (1) s'écartent des côtés extérieurs du réservoir doseur suffisamment pour que le réservoir doseur quand il est rempli à moitié de liquide ne laisse celui-ci s'écouler que dans le cas d'une inclinaison de plus de 60° par rapport à sa position avec l'orifice tourné vers le haut, et
• les lignes médianes du moyen de fixation (2)) et de l'orifice (1) s'étendent dans un même plan et perpendiculairement l'une à l'autre.

2. Réservoir doseur selon la revendication 1,
caractérisé en ce que
les moyens de fixation servant à mettre en place le réservoir doseur sont constitués sous la forme d'un trou borgne (2), adapté à la fermeture du flacon, sur un côté du réservoir doseur.

3. Réservoir doseur selon la revendication 1 ou 2,
caractérisé par
des saillies et/ou des rentrées de la paroi latérale ou des parois latérales, moulées qui s'étendent en parallèle et horizontalement dans la position de remplissage, en particulier sous la forme de gradins (4).

4. Réservoir doseur selon lune des revendications précédentes,
caractérisé en ce que
le réservoir doseur a un fond de sustentation (5) opposé à l'orifice de remplissage (1), l'étendue de la surface étant au moins aussi grande que la surface de la section transversale de l'orifice de remplissage (1) du réservoir doseur.

5. Réservoir doseur selon la revendication 4,
caractérisé en ce que
le fond de sustentation (5) présente une surface qui est au moins 2,5 fois aussi grande que la surface de la section transversale de l'orifice de remplissage (1) du réservoir doseur.

6. Unité d'emballage pour des produits de lavage liquides, consistant en un flacon et un réservoir doseur selon l'une des revendications précédentes,
caractérisé en ce que
le diamètre intérieur de l'orifice de remplissage (1) du réservoir doseur est à peu près aussi grand que le diamètre extérieur de l'embouchure de versement du flacon.

7. Unité d'emballage selon la revendication 6,
caractérisé en ce que
le diamètre intérieur de l'orifice de remplissage(1) du réservoir doseur, réalisé en une matière plastique élastique, est légèrement plus petit que le diamètre extérieur de l'embouchure de versement du flacon.
